**Europäisches Patentamt**

**European Patent Office**

**Office européen des brevets**

(19)

(11) Numéro de publication: **0 037 755**
**B1**

# FASCICULE DE BREVET EUROPEEN

(12)

(45) Date de publication du fascicule du brevet:
**10.08.83**

(51) Int. Cl.³: **F 16 D 55/224**

(21) Numéro de dépôt: **81400389.3**

(22) Date de dépôt: **13.03.81**

(54) Frein à disque à étrier coulissant.

(30) Priorité: **14.03.80 FR 8005706**

(43) Date de publication de la demande:
**14.10.81 Bulletin 81/41**

(45) Mention de la délivrance du brevet:
**10.08.83 Bulletin 83/32**

(84) Etats contractants désignés:
**DE GB IT SE**

(56) Documents cités:
**FR-A-2 432 651**
**GB-A-1 481 608**
**GB-A-1 540 102**
**US-A-3 835 970**

(73) Titulaire: **SOCIETE ANONYME D.B.A., Centre Paris Pleyel, F-93521 St-Denis Cédex 01 (FR)**

(72) Inventeur: **le Deit, Gérard, 51-55 rue de la Motte, F-93300 Aubervilliers (FR)**

(74) Mandataire: **Poidatz, Emmanuel et al, Service Brevets Bendix 44 rue François 1er, F-75008 Paris (FR)**

ACTORUM AG

Frein à disque à étrier coulissant

L'invention a pour objet un frein à disque à étrier coulissant notamment pour véhicule automobile.

L'invention concerne en particulier un frein à disque dont l'étrier est monté coulissant au moyen d'au moins une colonnette axiale, sur un support fixe dans lequel sont reçus en ancrage et en coulissement deux éléments de friction susceptibles de venir en engagement de friction avec les faces opposées d'un disque tournant lors de la mise en œuvre d'un moteur de frein agissant directement sur l'un des éléments de friction et agissant sur l'autre élément de friction par réaction au travers de l'étrier coulissant.

On connaît du brevet français no. 77-23 127 publié sous le no. 2 360 012 un frein à disque du type défini ci-dessus dans lequel deux colonnettes axiales traversent des alésages prévus en vis-à-vis dans le support fixe de l'étrier, des manchons de coulissement et de protection étant montés dans les alésages pour coopérer avec les colonnettes. Dans ce type de frein, des interventions telles que le changement d'un piston, d'un joint de piston et en particulier le changement des éléments de friction peuvent conduire à basculer l'étrier de frein en le faisant pivoter autour d'une des colonnettes axiales. Lorsque l'on a basculé suffisamment l'étrier pour dégager complètement le support fixe, l'étrier risque de coulisser vers l'extrémité libre de la colonnette et ainsi de se désolidariser du support fixe. Une chute accidentelle de l'étrier peut provoquer alors des dommages difficilement décelables et qui ne correspondent pas toujours aux exigences de fiabilité requises dans les systèmes de freinage des véhicules automobiles.

L'invention a pour objet un frein à disque du type décrit plus haut dans lequel un tel inconvénient est évité.

Dans ce but, l'invention propose un frein à disque monté coulissant sur un support fixe et comportant deux éléments de friction reçus en ancrage et en coulissement dans ledit support fixe et susceptibles de venir en engagement de friction avec les faces opposées d'un disque tournant lors de la mise en œuvre d'un moteur de frein agissant directement sur l'un des éléments de friction et agissant sur l'autre élément de friction par réaction au travers de l'étrier coulissant, au moins une colonnette axiale coulissante solidaire de l'étrier ou du support fixe et reçue en coulissement dans un alésage correspondant formé dans le support fixe ou étrier, ladite colonnette coopérant avec l'alésage correspondant au moyen d'un manchon immobilisé axialement dans ledit alésage, caractérisé en ce que ledit manchon et ladite colonnette comportent des moyens de butée unidirectionnelle susceptibles de s'effacer élastiquement afin de permettre l'introduction axiale de la colonnette dans le manchon lors de l'assemblage du frein.

Il apparaît ainsi que grâce à l'invention le coulissement de la colonnette par rapport au manchon est limitée afin d'éviter une chute accidentelle de l'étrier.

On décrira maintenant à titre d'exemple non limitatif deux modes de réalisation de l'invention en se référant aux figures annexées dans lesquelles les fig. 1 à 3 représentent un mode de réalisation et la fig. 4 le deuxième mode de réalisation:
- la fig. 1 est une vue de face d'un frein à disque réalisé conformément à l'invention et montrant les phases d'assemblage du frein;
- la fig. 2 est une vue de dessus du frein à disque de la fig. 1 dont certaines portions sont représentées en coupes partielles suivant les lignes A–A et B–B de la fig. 1;
- la fig. 3 est une vue agrandie en coupe suivant la ligne C–C des moyens de butée représentés à la fig. 2; et
- la fig. 4 est une vue agrandie en coupe suivant la ligne C–C de la fig. 2 des moyens de butée selon un deuxième mode de réalisation.

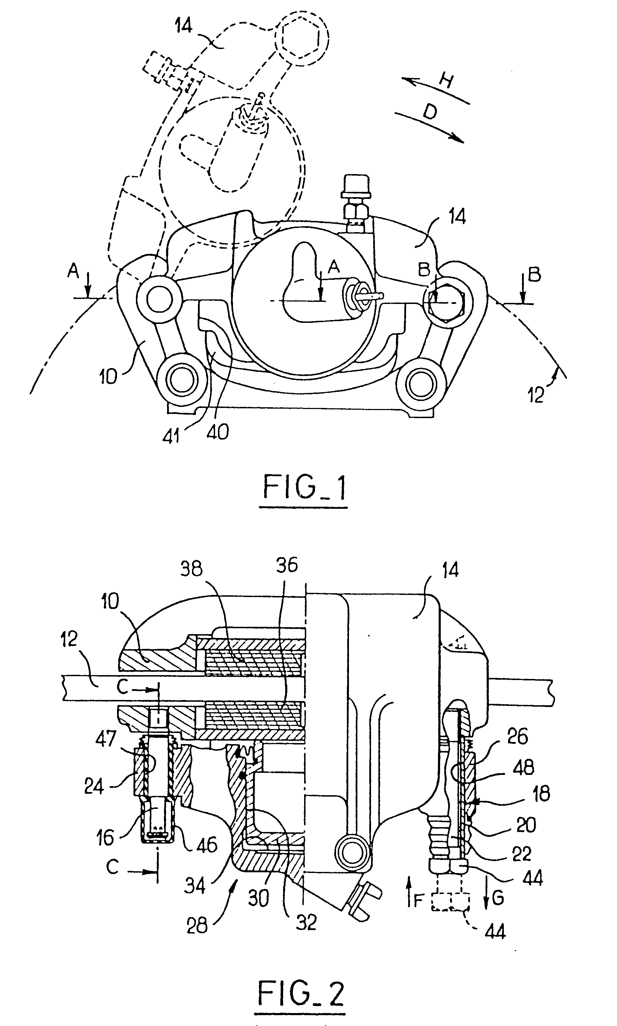

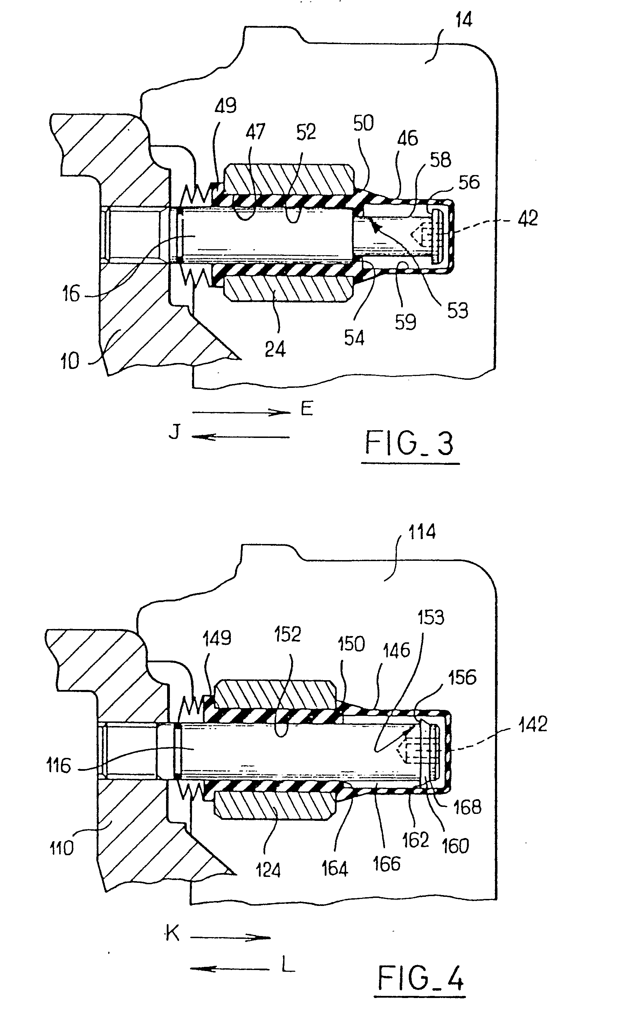

Le frein à disque représenté sur les fig. 1 à 3 comporte un organe support 10 prévu pour être associé à une partie fixe du véhicule (non représenté) et constitué dans le mode de réalisation représenté par une plaque disposée au voisinage d'un disque 12 prévu pour être associé en rotation à une roue du véhicule (non représentée). Le support fixe 10 reçoit en coulissement un étrier mobile 14 chevauchant le disque. L'étrier coulisse sur le support fixe au moyen de colonnettes axiales 16 et 18 circonférentiellement espacées dont les axes sont sensiblement parallèles à l'axe du disque 12. Les colonnettes 16 et 18 sont disposées entre le support fixe 10 et des bras 24 et 26 de l'étrier 14. L'étrier 14 comporte des moyens d'actionnement 28 constitués par un moteur de frein hydraulique comprenant un piston 30, monté coulissant dans un alésage 32 défini dans l'étrier 14, sensible à la pression régnant dans une chambre de commande 34 susceptible d'être reliée à une source de pression telle que, par exemple, le maître-cylindre d'un véhicule. Le piston 30 est disposé de façon à solliciter directement un premier élément de friction 36 contre une première face du disque 12 lorsque le fluide sous pression est admis dans la chambre 34. L'étrier 14 se déplace alors par réaction et coulisse sur les colonnettes 16 et 18 pour venir solliciter un second élément de friction 38 contre l'autre face du disque 12. Comme le montre en particulier la fig. 1 l'élément de friction 36 est supporté en coulissement et en ancrage par des bords circonférentiellement espacés 40 d'une ouverture 41 ménagée dans le support fixe 10. D'une manière identique l'élément de friction 38 est également reçu en ancrage et en coulissement sur le support fixe 10. Comme le montre plus particulièrement la fig. 2 les deux colonnettes 16 et 18 sont associées au support fixe 10 par une liaison filetée. Plus précisément, les colonnettes 16 et 18 qui permettent le mouvement de coulissement de l'étrier 14 sont montées vissées sur ledit support fixe. La tête hexagonale 44 du boulon 22 permet de visser sur le support fixe 10 l'ensemble bague 20 et boulon 22 à l'aide d'une clé correspondante (non représentée). Dans l'exemple représenté et comme le montrent plus particulièrement les fig. 3 et 4 la colonnette 16 est munie sur une extrémité d'une zone filetée destinée à être vissée dans le support fixe 10, la deuxième extrémité libre est munie d'une tête de vis à six pans creux 42 permettant de visser ladite colonnette dans ledit support à l'aide d'une clé correspondante (non représentée).

Les bras 24 et 26 de l'étrier 14 sont munis d'alésages 47 et 48 dans lesquelles sont enfilées les colonnettes 16 et 18 respectivement.

En se rapportant à la fig. 3 on voit que l'alésage 47 du bras 24 est pourvu d'un manchon cylindrique 46 fermé à une extrémité, rendu solidaire du bras 24 au moyen de deux épaulements 49 et 50 venant immobiliser le manchon 46 par rapport au bras 24 de l'étrier 14. Le manchon 46 est réalisé en matériau élastique et fait office de bague antibruit. L'étrier 14 coulisse sur la colonnette 16 au moyen du manchon 46 et directement sur la bague 20 de la colonnette 18.

Dans le mode de réalisation représenté à la fig. 3 et conformément à l'invention, le manchon 46 et la colonnette 16 comportent des moyens de butée unidirectionnelle 53. Les moyens de butée 53 comportent une saillie élastique 54 circonférentielle, venue de matière avec le manchon 46, s'étendant radialement depuis l'alésage interne 52 du manchon dans un dégagement axial 58 pratiqué dans la colonnette 16. Plus précisément le dégagement axial 58 est formé par une gorge radiale pratiquée dans la colonnette 16. Le dégagement 58 présente une face d'extrémité 56 dont le diamètre extérieur est plus grand que le diamètre intérieur de la saillie 54 du manchon 46. L'extrémité fermée du manchon 46 forme un alésage 59 d'un diamètre supérieur à l'alésage 52 dudit manchon.

On comprend que la saillie élastique 54 sera rapportée sur le manchon 46 lorsque celui-ci sera réalisé en matériau non élastique. On comprend également que la saillie 54 n'est pas nécessairement continue tout autour de l'alésage 52 dudit manchon et qu'elle peut s'étendre aussi bien dans une gorge radiale pratiquée dans la colonnette 16 que dans une ou plusieurs rainures réalisées dans ladite colonnette.

Dans le mode de réalisation représenté à la fig. 4 où les mêmes éléments porteront la même référence augmentée de 100, et conformément à l'invention, le manchon 146 et la colonnette 116 comportent des moyens de butée unidirectionnelle 153. Les moyens de butée 153 comportent un anneau élastique 160 monté dans une gorge circonférentielle pratiquée dans la colonnette 116 et s'étendant radialement depuis ladite colonnette dans un dégagement 166 pratiqué dans le manchon 146. La gorge circonférentielle pratiquée dans la colonnette 116 est telle que l'anneau élastique 160 qui est du type jonc peut s'effacer radialement à l'intérieur de cette gorge. Ledit jonc présente une arête périphérique 162 d'un diamètre libre supérieur au diamètre de l'alésage 152 de la bague 146, ladite arête se trouvant en vis-à-vis de la face 164 du dégagement 166 de la bague 146. La deuxième arête périphérique 168 du jonc 160 a un diamètre libre sensiblement plus faible que le diamètre de l'arête 162.

On comprend que l'anneau élastique décrit comme un jonc peut être avantageusement remplacé par un anneau en matière élastique par un circlips ou toute autre pièce du même type.

L'opération de montage de l'étrier 14 sur le support 10 s'effectue de la manière suivante pour le mode de réalisation représenté par les fig. 1 à 3:

La colonnette 16 est déjà vissée sur le support fixe 10, l'étrier 14 est préalablement équipé du manchon 46 dans le bras 24 et également de la colonnette 18 dont le boulon 22 est en retrait comme indiqué sur la fig. 2, l'étrier est alors présenté basculé comme indiqué sur la fig. 1, le manchon 46 étant en vis-à-vis de la colonnette 16. La colonnette 16 est introduite dans le manchon 46 suivant la flèche E jusqu'à venir en appui sur la saillie 54. Un déplacement axial complémentaire permet à la colonnette d'effacer élastiquement vers l'extérieur la saillie 54 par un basculement de ladite saillie vers l'alésage 59 du manchon 46 et de poursuivre l'introduction de la colonnette, un déplacement supplémentaire permet à la saillie 54 de pénétrer dans le dégagement 58 de la colonnette 16. L'étrier 14 est alors basculé suivant la flèche D jusqu'à ce que la mise en place du boulon 22 de la colonnette 18 dans le support fixe 10 soit possible par vissage suivant la flèche F.

Pour une intervention comme par exemple le changement des éléments de friction, on procédera comme suit: le boulon 22 est dévissé suivant la flèche G pour prendre sa position comme indiqué sur la fig. 2, l'étrier est basculé suivant la flèche H pour prendre la position indiquée sur la fig. 1, l'extraction des éléments de friction est alors possible.

Dans le cas où l'étrier est sollicité dans le sens extraction de la colonnette 16 du manchon 46, suivant la flèche J, l'extrémité 56 du dégagement 58 vient en appui sur la saillie 54, tout déplacement supplémentaire provoque un basculement de la saillie vers l'intérieur de l'alésage 47 du bras 24. La saillie ne peut s'effacer du fait même de la présence de l'alésage 47 qui limite la déformation du manchon et donc l'effacement de la saillie. La coopération de la face d'extrémité 56 du dégagement 58 de la colonnette 16 et de la saillie 54 réalise bien la fonction de butée unidirectionnelle.

Dans le mode de réalisation représenté fig. 4 le montage de l'étrier 114 sur le support 110 s'effectue de la manière suivante:

La colonnette 116 est déjà vissée sur le support fixe 110 l'étrier 114 est préalablement équipé du manchon 146 dans le bras 124 et également de la colonnette 18 dont le boulon 22 est en retrait comme indiqué sur la fig. 2, l'étrier est alors présenté basculé comme indiqué sur la fig. 1, le manchon 146 étant en vis-à-vis de la colonnette 116. La colonnette 116 est alors introduite dans le manchon 146 suivant la flèche K jusqu'à ce que l'anneau élastique 160 s'appuie sur l'alésage 152 du manchon 146. Il est clair que si le manchon est réalisé dans un matériau élastique il peut par déformation participer à l'effacement des moyens de butée. Un effort axial complémentaire permet à l'anneau élastique 160 de s'effacer radialement dans la gorge de la colonnette 146 et de poursuivre l'introduction de la colonnette. Un déplacement suffisant pour atteindre le dégagement 166 du manchon 146 permet à l'anneau élastique 160 de reprendre sa position libre et de pénétrer dans le dégagement 166 dudit manchon. L'étrier 14 est alors basculé suivant la flèche D jusqu'à ce que la mise en place du boulon 22 de la colonnette 18 dans le support fixe 10 soit possible par vissage suivant la flèche F. Pour une intervention comme par exemple le changement des éléments de friction, on procédera comme suit: le boulon 22 est dévissé suivant la flèche G pour prendre sa position comme indiqué sur la fig. 2, l'étrier est basculé suivant la flèche H pour prendre la position indiqué sur la fig. 1, l'extraction des éléments de friction est alors possible. Dans le cas où l'étrier est sollicité dans le sens extraction de la colonnette 116 du manchon 146 suivant la flèche L, la face 156 de l'anneau élastique vient en appui sur l'extrémité 164 du dégagement 166 du manchon 146. Tout déplacement supplémentaire tend à enfoncer le manchon 146 dans l'alésage 152 du bras 124. L'épaulement 150 s'oppose au déplacement du manchon 146. La coopération de la face 156 de l'anneau élastique 160 avec la face d'extrémité 164 du dégagement 166 du manchon 146 réalise bien la fonction de butée unidirectionnelle.

Il apparaît donc à la lecture de ce qui précède que la saillie élastique 54 et le dégagement 58 pour le premier mode et la saillie élastique 160 et le dégagement 166 pour le deuxième mode de réalisaton agissent comme des butées unidirectionnelles qui s'effacent pour l'assemblage du frein et qui empêchent une désolidarisation accidentelle de l'étrier et du support fixe.

**Revendications**

1. Frein à disque à étrier (14) monté coulissant sur un support fixe (10) comportant deux éléments de friction (36, 38) reçus en ancrage et en coulissement dans ledit support fixe et susceptibles de venir en engagement de friction avec les faces opposées d'un disque tournant (12) lors de la mise en œuvre d'un moteur de frein (28) agissant directement sur l'un des éléments de friction (36) et agissant sur l'autre élément de friction (38) par réaction au travers de l'étrier coulissant, au moins une colonnette axiale (16) coulissante solidaire de l'étrier ou du support fixe et reçue en coulissement dans un alésage correspondant (47) formé dans le support fixe ou l'étrier, ladite colonnette coopérant avec l'alésage correspondant au moyen d'un manchon (46) immobilisé axialement dans ledit alésage, caractérisé en ce que ledit manchon (46) et ladite colonnette (16) comportent des moyens de butée unidirectionnelle (53) susceptibles de s'effacer élastiquement afin de permettre l'introduction axiale de la colonnette dans le manchon lors de l'assemblage du frein.

2. Frein à disque selon la revendication 1, caractérisé en ce que lesdits moyens de butée (53) comportent une saillie élastique (54) s'étendant radialement depuis ledit manchon ou depuis ladite colonnette pour coopérer avec une surface de butée (56) formée sur ladite colonnette ou sur ledit manchon pour s'opposer à l'échappement accidentel de la colonnette.

3. Frein à disque selon la revendication 1, caractérisé en ce que ladite saillie élastique (54) s'étend radialement depuis ledit manchon (46) dans un dégagement axial (58) pratiqué dans ladite colonnette, ladite surface de butée (56) étant constituée par une face d'extrémité dudit dégagement axial (58).

4. Frein à disque selon la revendication 3, dans lequel ledit manchon (46) est réalisé en un matériau élastique, caractérisé en ce que ladite saillie élastique (54) est venue de matière avec ledit manchon.

5. Frein à disque selon la revendication 4, caractérisé en ce que ladite saillie (54) est un épaulement radial interne, ledit dégagement axial (58) étant constitué par une gorge radiale pratiquée dans ladite colonnette.

6. Frein à disque selon la revendication 2, caractérisé en ce que ladite saillie élastique (160) s'étend radialement depuis ladite colonnette (116) dans un dégagement axial (166) pratiqué dans ledit manchon (146), ladite surface de butée (164) étant constituée par une face d'extrémité dudit dégagement axial (166).

7. Frein à disque selon la revendication 6, caractérisé en ce que ladite saillie élastique (160) consiste en un anneau élastique monté dans une gorge de ladite colonnete (116) dans laquelle ledit anneau est susceptible de s'effacer radialement lors de l'introduction de ladite colonnette (116) dans ledit manchon (146).

**Claims**

1. Disc brake having a caliper (14) slidingly mounted on a fixed support (10), comprising a pair of friction elements (36, 38) received, anchored and sliding in said fixed support and adapted to frictionally engage the opposed faces of a rotatable brake disc (12) during operation of a brake actuator (28) acting directly upon the one of the friction elements (36) and acting upon the other friction element (38) via the floating caliper, at least one sliding axial column (16) fixed to the caliper or the fixed support and slidingly received in a corresponding bore (47) formed in the fixed support or the caliper, said column cooperating with the corresponding bore by means of a sleeve (46) axially fixed in said bore, characterized in that said sleeve (46) and said column (16) comprise unidirectional abutment means (53) adapted to become elastically inoperative in order to permit axial insertion of the column in the sleeve during assembly of the brake.

2. Disc brake according to claim 1, characterized in that said abutment means (53) comprise an elastic projection (54) radially extending from said sleeve or from said column for cooperating with an abutment surface (56) formed on said column or on said sleeve for opposing an accidental removal of the column.

3. A disc brake according to claim 2, characterized in that said elastic projection (54) extends radially from said sleeve (46) into an axial free space (58) formed in said column, said abutment surface (56) being constituted by an end face of said axial free space (58).

4. Disc brake according to claim 3 in which said sleeve (46) is comprised of an elastic material, characterized in that said elastic projection (54) is integral with the material of the sleeve.

5. Disc brake according to claim 4, characterized in that said projection (54) is an internal radial shoulder, said axial free space (58) being constituted by a radial groove provided in said column.

6. Disc brake according to claim 2, characterized in that said elastic projection (160) extends radially from said column (116) into an axial free space (166) formed in said sleeve (146), said abutment surface (164) being constituted by an end face of said axial free space (166).

7. Disc brake according to claim 6, characterized in that said elastic projection (160) consists of an elastic ring mounted in a groove of said column (116), in which said ring is adapted to radially disappear during insertion of said column (116) in said sleeve (146).

**Patentansprüche**

1. Scheibenbremse mit einem Gleitsattel (14), der auf einem festgelegten Bremsträger (10) gleitend gelagert ist, mit zwei Reibbacken (36, 38), die im Bremsträger gleitend abgestützt sind und mit den gegenüberliegenden Seiten einer Bremsscheibe (12) in Reibanlage bewegbar sind, wenn eine Bremsbetätigungsvorrichtung (28), die auf eine der Reibbacken (36) unmittelbar und auf die andere Reibbacke (38) über den Gleitsattel eingerückt, betätigt wird, und mindestens einem gleitenden axialen Bolzen (16), der mit dem Gleitsattel oder dem Bremsträger fest verbunden ist und in einer entsprechenden Bohrung (47) des Bremsträgers oder des Gleitsattels gleitend sitzt, wobei der Bolzen mit der entsprechenden Bohrung mittels einer Hülse (46) zusammenwirkt, die in der Bohrung axial festgelegt ist, dadurch gekennzeichnet, dass die Hülse (46) und der Bolzen (16) in einer Richtung wirksame Anschlagmittel (53) aufweisen, die elastisch ausser Betrieb setzbar sind, um den Bolzen beim Zusammenbau der Scheibenbremse in die Hülse axial einsetzen zu können.

2. Scheibenbremse nach Anspruch 1, dadurch gekennzeichnet, dass die Anschlagmittel (53) einen elastischen Vorsprung (54) aufweisen, der sich von der Hülse oder vom Bolzen aus radial weg erstreckt, um mit einer Anschlagfläche (56) zusammen zu wirken, die am Bolzen oder an der Hülse gebildet ist, um einem zufälligen Entweichen des Bolzens entgegenzuwirken.

3. Scheibenbremse nach Anspruch 2, dadurch gekennzeichnet, dass der elastische Vorsprung (54) sich von der Hülse (56) aus radial in einen axialen Freiraum (58) des Bolzens erstreckt, wobei die Anschlagfläche (56) von einer Stirnfläche des axialen Freiraumes (58) gebildet wird.

4. Scheibenbremse nach Anspruch 3, bei der die Hülse (46) aus einem elastischen Material besteht, dadurch gekennzeichnet, dass der elastische Vorsprung (54) aus dem Material der Hülse hergestellt ist.

5. Scheibenbremse nach Anspruch 4, dadurch gekennzeichnet, dass der radiale Vorsprung (54) eine innere radiale Schulter ist, wobei der axiale Freiraum (58) von einer in den Bolzen eingearbeiteten Radialnut gebildet wird.

6. Scheibenbremse nach Anspruch 2, dadurch gekennzeichnet, dass der elastische Vorsprung (160) sich vom Bolzen (116) aus radial in einen axialen Freiraum (166) der Hülse (146) erstreckt, wobei die Anschlagfläche (164) von einer Stirnseite des axialen Freiraumes (166) gebildet wird.

7. Scheibenbremse nach Anspruch 6, dadurch gekennzeichnet, dass der elastische Vorsprung (160) aus einem elastischen Ring besteht, der in eine Nut des Bolzens (116) eingesetzt ist, in die der Ring beim Einsetzen des Bolzens (116) in die Hülse (146) radial eintauchen kann.

0 037 755

FIG_1

FIG_2

FIG_3

FIG_4